# EUROPEAN PATENT SPECIFICATION

(11) **EP 4 046 532 B1**
(45) Date of publication and mention of the grant of the patent: **11.03.2026**
(21) Application number: 19947919.7
(22) Date of filing: 30.09.2019
(51) Int. Cl.: A47B 45/00, A47B 47/02, A47B 47/03, F16B 5/00, F16B 12/38, A47B 96/20

(54) **MODULAR SYSTEM FOR BUILDING FURNITURE USING ALUMINIUM PROFILES**
MODULARES SYSTEM ZUM BAU VON MÖBELN UNTER VERWENDUNG VON ALUMINIUMPROFILEN
SYSTÈME MODULAIRE DE CONSTRUCTION DE MEUBLES À PARTIR DE PROFILÉS EN ALUMINIUM

(43) Date of publication of application: 24.08.2022
(73) Proprietor: Rodriguez Portillo, Constancio, 10910 Cáceres (ES)
(72) Inventor: Rodriguez Portillo, Constancio, 10910 Cáceres (ES)
(74) Representative: Santarelli
(86) International application number: PCT/ES2019/070652
(87) International publication number: WO 2021/064258

(56) References cited:
- ES-A1- 2 735 825
- ES-A1- 2 735 825
- ES-U- 286 067
- FR-A5- 2 109 673
- GB-A- 2 189 414
- US-A- 3 203 149
- US-A- 3 416 793
- US-A- 3 605 363
- US-A1- 2018 094 664

## Description

### OBJECT OF THE INVENTION

The present invention relates to a system of modular parts of aluminum profiles that allow to configure and build a multitude of possibilities and combinations of furniture.

One of the main problems in the kitchen, bathrooms and other places in a house when designing and configuring furniture is dealing with the columns and pillars that complicates the uniformity of furniture backgrounds, cabinets and shelves.

The system that describes the present invention proposes a solution to the disparity of backgrounds necessary to match the front face of contiguous furniture to be able to combine in an infinite number of ways through the different profiles that compose it.

On the other hand, it does not need machinery to cut bottoms or assembly specialists, since the user of the house can easily assemble it by assembling the aluminum profiles that make up the system. In the same way, the furniture could be dismantled and its dimensions and characteristics modified by combining the profiles in a different way, adding or removing pieces.

Other of the many advantages of this invention would be the following:
- Being aluminum, the durability of the material makes it a piece of furniture for life, it does not rust, does not swell, is not affected by humidity or rain, in addition to being a very clean and hygienic material. It is also a material that does not ignite unlike wood, so it is an important factor to reduce the risk of fire in kitchens.
- It does not have edges like chipboard, it does not need to be painted or varnished.
- Combining some profiles or others, more profiles or less, different measures and furniture backgrounds are achieved through a system of tabs very easy to assemble and disassemble.
- The profiles contain reinforced areas to facilitate the installation of any type of accessory such as hinges, shelf supports, etc.
- The strength of the profiles allows to assemble furniture of dimensions such that conventional furniture would yield or curve.
- The system is made in such a way that for transport it can occupy a very small space, as it does not have the need to go practically assembled by the manufacturer or distributor.

The industrial application of this invention is within the manufacture and assembly of furniture, and more specifically manufacture and assembly of furniture from a modular system of aluminum profiles.

### BACKGROUND OF THE INVENTION

Although no invention identical to the one described has been found, we expose below the documents found that reflect the state of the art related to it.

Thus, document ES2531617T3 refers to a multifunctional modular counter/display, consisting of at least:- a metal structure consisting of at least three metal frames that form the front and side uprights of said counter/display; consisting of at least:- a set of front and side walls attached respectively to the front frame and a side frame: a removable presentation board fixed to said metal structure at the top of each of the three metal frames. Being the front and side walls and the removable presentation board fixed to the metal frames by means of a non-permanent adhesive band. The aforementioned invention refers to a counter/display while the main invention refers to a modular system of pieces to create furniture and shelves.

ES2252094T3 describes a constructive element with at least one joining surface for an assembly with other constructive elements, being arranged at least in sections a matrix on at least one of the joining surfaces, the matrix being solidified at least partially and composed of an adhesive, resin or wax, being arranged in a distributed way a plurality of capsules in the matrix, containing the capsules a substance of an adhesive system by reaction and releasing by external action at least a part of the capsules, at least partially, the substance contained in them, characterized by the fact that the matrix presents at least two layers of matrix, because at least one layer of matrix presents the capsules and because at least another layer of matrix does not present any capsule. The system of union between constructive elements of the aforementioned invention is nothing like that proposed by the main invention, apart from comprising a multitude of different elements to be assembled, while the main invention presents a set of very similar pieces between them for the composition of furniture and shelves.

ES2014903A6 describes improvements in the assembly system of auxiliary furniture, consisting of platforms, horizontal and tubular support modules, that the tubular modules consist of a body of polygonal section, hollow, at whose ends they present, conveniently anchored two internal bushings, equipped with a filleted axial cavity, the upper bush being equipped with an outstanding stem filleted, so that when manually rotating the tubular module, using the module itself as the drive handle, the filleted stem is inserted and threaded into the filleted and calibrated axial cavity of the female bush at the lower end of the module immediately above, sandwiching between both modules, properly aligned, one of the sleeves, of polygonal section, equipped with calibrated axial pitch, that for mounting purposes present in their contour the horizontal platforms. The assembly system described uses a totally different assembly system than the one proposed by the main invention, while one comprises horizontal platforms and tubular modules, another uses aluminum profiles assembled with each other.

ES2172358B1 and ES2263329B1, describes a system of construction of aluminum sheet furniture without structure and improvements of the same respectively, consisting of the industrialized construction of aluminum furniture by which the sheets are cut foreseeing a perimeter area destined to be boxed and folded. It is drawn, the perforations that will house the means of fastening of the shelves or the means of union of the faces are drilled, the vertical folds are folded at right angles, the lateral faces are vertically assembled with the back face and the face of simple fold that forms the base to the lateral and rear faces. The upper span of the front is closed by a separator. On the four upper angles are placed four reinforcement brackets. On the outside of the base, two means of reinforcement consisting of horizontal square profiles are mounted to the rear face that support the legs, the conventional door is mounted fixing the hinges to internal counterforces of the same and the sides equal to those are attached to the lateral faces but with the folds inwards. The system described is based on the manufacture of cut and folded aluminum sheets that in turn make faces and structure of furniture, while the main invention comprises a set of profiles assembled with each other.

FR 2 109 673 A5 and US 2018/094664 A1 disclose further examples of modular systems.

Conclusions: As can be seen from the research carried out, none of the documents found solves the problems posed as the proposed invention does.

### DESCRIPTION OF THE INVENTION

The modular system of construction of furniture from aluminum profiles object of the present invention is constituted from a set of extruded aluminum profiles, more or less long and rectangular, which make up the walls, the base and the ceiling, forming in itself the structure of the furniture, and that present at their ends double finishes in the form of a hitch that allow linking and fixing each other varying the dimension of the bottom of the furniture.

Some profiles have these terminations at only one end and others at both, with some main pieces with a flat end (facing the user), where it has a groove to house a silicone rubber, and another end with the double hitch finish (facing the bottom or wall), and some secondary pieces that have an end with the finish that fits into the double hitch of the piece Main and at the other end have exactly the same double hitch shape of the main piece to be able to connect new secondary pieces until reaching the desired background dimension. These secondary pieces can be unique or be arranged in two or more lengths, depending on the need to connect more or less pieces until reaching the desired furniture bottom dimension.

A third type of profile, without ends with double hitch finish serves to join or close horizontally the structure of the furniture that would form its side walls based on primary and secondary profiles, when it is necessary that the upper or lower face of the furniture is hollow (for example to place sink, ceramic hob, etc.).

The union between profiles that form the walls with the profiles that make the base or ceiling, or the union between profiles that form the walls with the so-called third type profiles is made by screws, where these profiles have, inside the rectangle that form them, circular tubular reinforcements of non-complete arch and, on the outside of one of their faces, a mark aligned with the axis of these tubular reinforcements to give consistency to the union of 90 degrees. A drill is drilled on the outside of the furniture, and the screw crosses the inner face of the profile and threads on the tubular reinforcement of the other piece.

The union by means of a double coupling finish to link some profiles with others and increase or decrease the bottom of the furniture consists, at one end, in the continuation of the lateral faces of the profile, one more than the other, and both finished in fasteners facing inwards, and comprising the other end where it also couples an extension of their faces, again one more than the other, and both finished in fasteners but facing outwards, having modified the prolongation of the faces of the profile in two angles of 45 degrees so that they are aligned internally with the fasteners of the hitch to be coupled.

According to the invention, the bottom of the furniture can be covered by aluminum plate, which is anchored to the profiles by inserting it into the space delimited by the fastener that is shorter of the two along with an extension perpendicular to the extension of the profile that contains the facing fastener.

In cases where the so-called third type profile is used and you want to cover the bottom with an aluminum plate, this profile includes in one of its corners a hole where the plate fits.

Both the main pieces and the so-called third type all have a groove that runs through their faces that give the view to insert a silicone rubber to isolate the interior of the furniture when there are doors.

All the main profiles include reinforcement in the form of an increase in interior thickness at certain points to improve grip for fixing screws for hinges, shelf supports, or any other accessory that a kitchen or bathroom cabinet may carry in particular.

### BRIEF DESCRIPTION OF THE DRAWINGS

For a better understanding of the present description are accompanied by drawings that represent a preferential realization of the present invention:

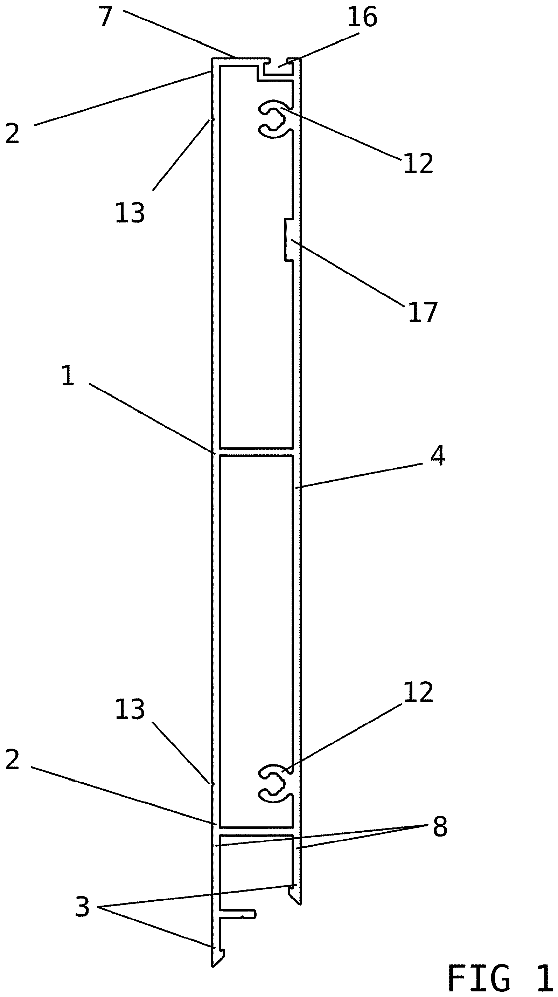

Figure 1: Main Type Profile View

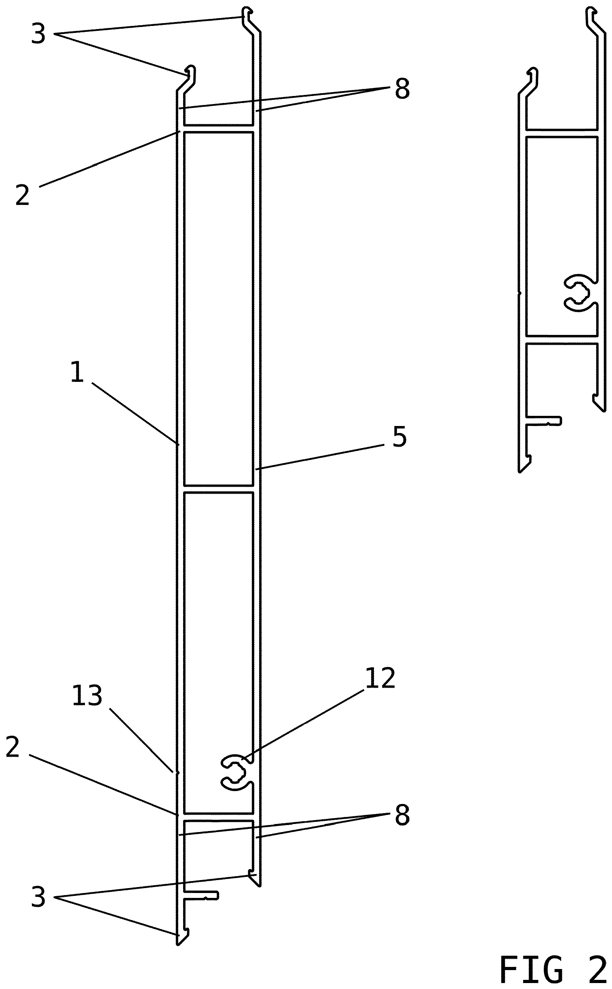

Figure 2: View of the secondary type profile (one or two sizes)

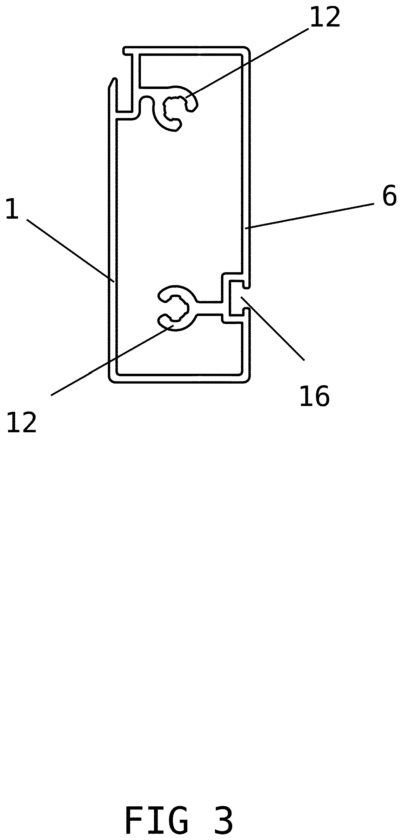

Figure 3: Third Type Profile View

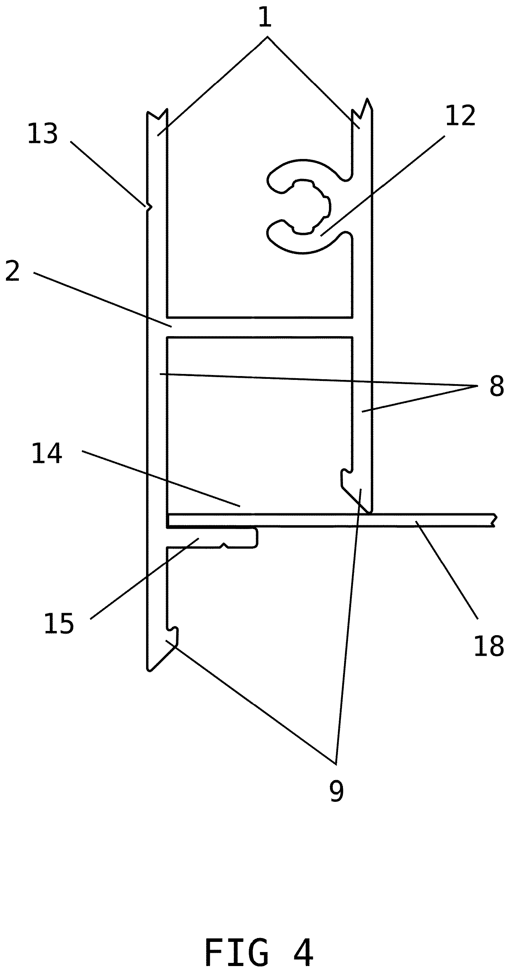

Figure 4: Detailed view of the end in the background (primary and/or secondary pieces)

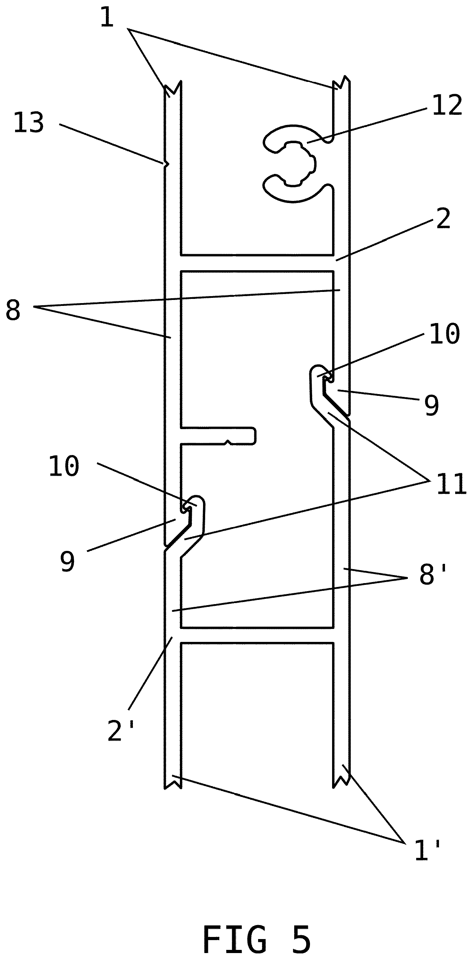

Figure 5: Detailed view of the type of hitch between clips

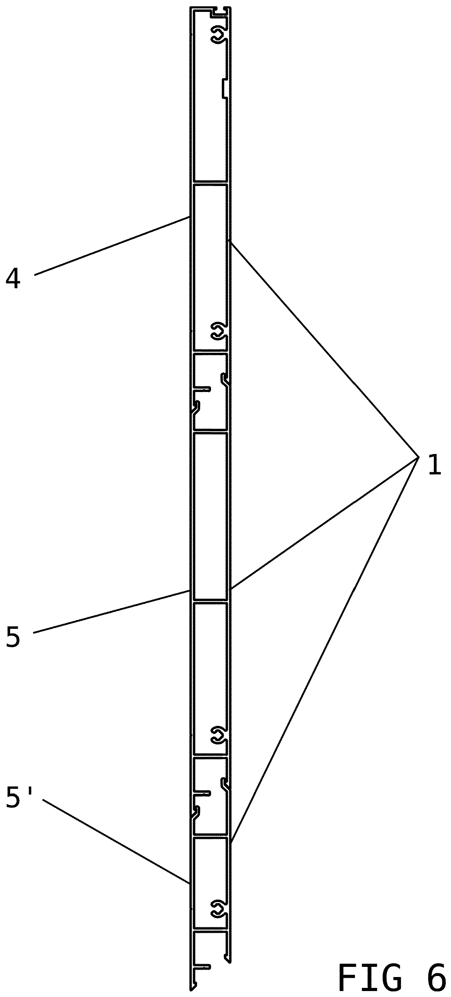

Figure 6: View of multiple profiles coupled by clips

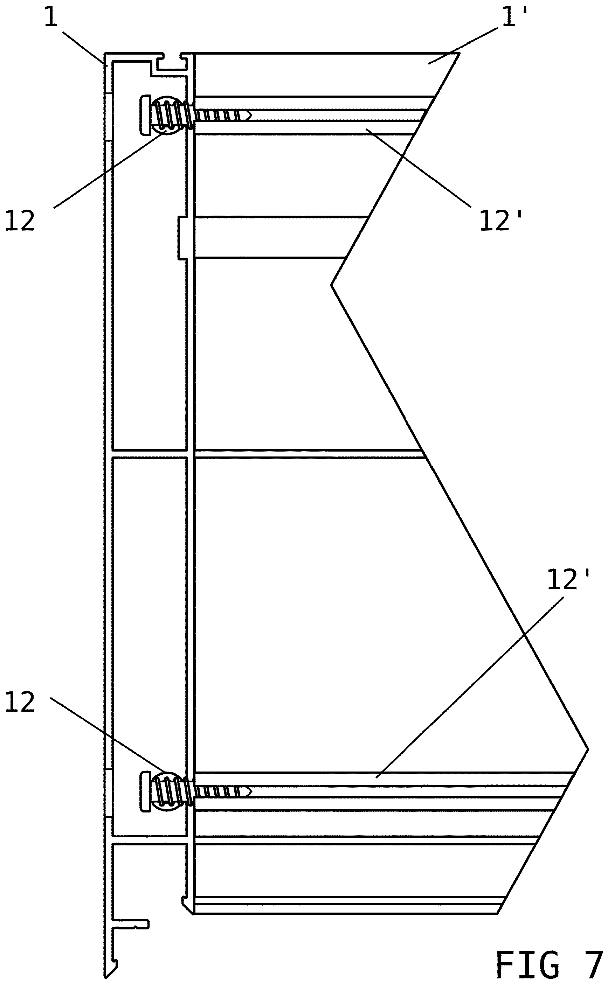

Figure 7: Detailed view of joining profiles that form 90 degrees

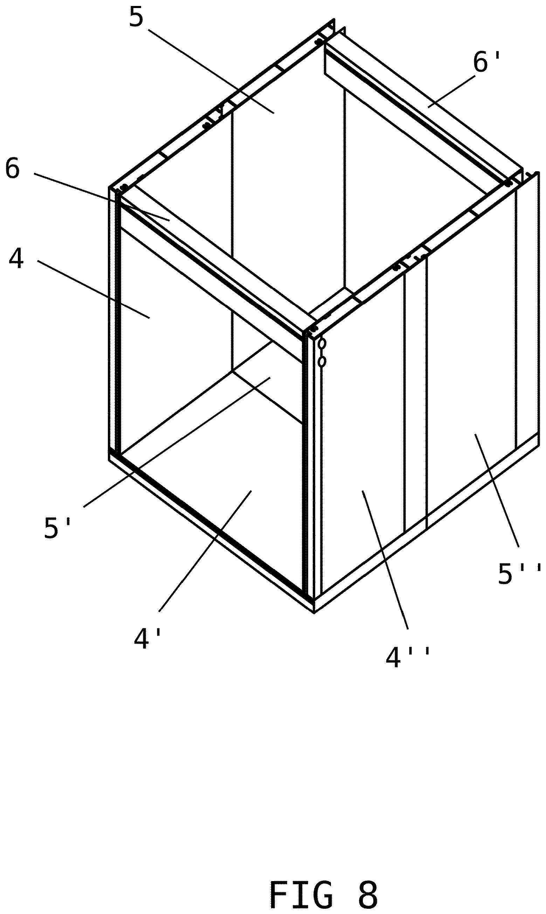

Figure 8: Perspective view of an example of furniture built from the modular system object of the present invention

The numerical references that appear in these figures correspond to the following constituent elements of the invention:
1. Extruded aluminium profile
2. Profile endpoint
3. Double hitch
4. Main type profile
5. Secondary type profile
6. Third type profile
7. Extreme with flat face
8. Prolongation of lateral faces
9. Fasteners facing inwards
10. Fasteners facing outwards
11. Modified 45 degree double angle
12. Tubular reinforcement
13. Aligned marking
14. Space for bottom sheet
15. Perpendicular extension
16. Silicone slot
17. Thicker reinforcement
18. Metal plate

### DESCRIPTION OF A PREFERRED REALIZATION

A preferential realization of the modular system of furniture construction from aluminum profiles object of the present invention, with allusion to numerical references, can be based on a set of extruded aluminum profiles (1), more or less long and rectangular, which make up the walls, the base and the ceiling, forming in itself the structure of the furniture, and that they have at their ends (2) double hitch finishes (3) that allow linking and fixing each other by varying the dimension of the bottom of the furniture.

According to the number of ends (2) with double coupling (3) to link some profiles with others, these profiles can be classified into main (4), secondary (5) and tertiary or third type (6). The main ones (4) have a flat face (7) which is the one that is visible and an end (2) with double hitch (3) that faces the wall or bottom; secondary (5) have hitches (3) at both ends (2); and those of the third type (6) have no hitches.

The union by means of a double coupling termination (3) to link some profiles with others and increase or decrease the bottom of the furniture consists, at one end (2), in the continuation of the lateral faces of the profile (8), one more than the other, and both finished in fasteners facing inwards (9), and comprising the other end (2) where it also couples an extension of their faces, again one more than the other, and both finished in fasteners but facing outwards (10), having modified the prolongation of the faces of the profile at two angles of 45 degrees (11) so that they are aligned internally with the fasteners of the hitch to be coupled.

The union between profiles that form the walls with the profiles that make the base or ceiling, or the union between profiles that form the walls with the so-called third type profiles is made by screws, where these profiles have, inside the rectangle that form them, circular tubular reinforcements of non-complete arch (12) and, on the outside of one of their faces, a mark aligned (13) with the axis of these tubular reinforcements (12) to give consistency to the union of 90 degrees. The joint itself is achieved by practicing a small drill on the outer face of the furniture, and the screw crosses the inner face of the profile and threads on the tubular reinforcement (12) of the other piece.

The bottom of the furniture is covered by aluminum plate (18), which is anchored to the profiles by inserting it into the space (14) delimited by the fastener that is shorter of the two along with an extension perpendicular (15) to the extension of the profile that contains the facing fastener.

Both the main pieces (4) and the so-called third type (6) all have a groove (16) that runs along their faces (7) that give the view to insert a silicone rubber to isolate the interior of the furniture when there are doors.

All the main profiles include a reinforcement (17) in the form of an increase in interior thickness close to the flat face (7) that is visible, to improve the grip for fixing screws for hinges, shelf supports, or any other accessory that can carry a kitchen or bathroom cabinet in particular.

In a different embodiment there may be different secondary parts (5) in which their only difference is the length from one end of the profile to the other.

## Claims

1. Modular system of furniture construction from aluminum profiles, comprising a set of extruded aluminum profiles (1), rectangular, which make up the walls, the base and the ceiling, forming in itself the structure of the furniture, **characterized in that** they have at their ends (2) double hitch finishes (3) that allow linking and fixing each other varying the dimension of the bottom of the furniture, this double coupling, at one end (2), consisting in the continuation of the lateral faces of the profile (8), one about 12 millimeters more than the other, and both finished in fasteners facing inwards (9), and comprising the other end (2) where it also couples an extension of their faces, again about 12 millimeters one more than the other, and both finished in fasteners but facing outwards (10), having modified their position and being slightly narrower than the width of the profile, so that they are aligned internally with the fasteners of the hitch to be coupled, thanks to a double angle of 45 degrees (11) just before reaching these outward facing fasteners (10); and **in that** the profiles comprise a space (14) delimited by the shorter of the two fasteners along with an extension perpendicular (15) to the extension of the profile that contains the facing fastener, for receiving a metal plate (18) that forms the bottom of the furniture.

2. Modular system of furniture construction from aluminum profiles, according to claim 1, **characterized in that** the pieces that form it can be classified according to the number of ends (2) with double hitch (3) that comprise to link some profiles with others, comprising main pieces (4), which have a flat face (7) that is the one that is visible and an end (2) with double hitch (3) that looks towards the wall or bottom; secondary pieces (5), which have hitches (3) at both ends (2); and pieces of the third type (6), which do not have hitches and serve to join or close horizontally the structure of the furniture that would form its side walls based on primary (4) and secondary (5) profiles, when it is necessary that the upper or lower face of the furniture is hollow, for example to place a sink or a ceramic hob.

3. Modular system of furniture construction from aluminum profiles, according to claims 1 and 2, **characterized in that** the union between profiles that form the walls with the profiles that make the base or ceiling, or the union between profiles that form the walls with the so-called third type profiles is made by screws, where these profiles comprise, on the inside of the rectangle that form them, tubular reinforcements (12) circular whose circle arch does not close completely and, on the outside of one of their faces, a mark aligned (13) with the axis of said tubular reinforcements (12) to give consistency to the union of 90 degrees, the joint itself is achieved by practicing a small drill on the outer face of the furniture, and the screw crosses the inner face of the profile and threads on the tubular reinforcement (12) of the other piece.

4. Modular system of furniture construction from aluminum profiles, according to claim 2, **characterized by** the fact that both the main pieces (4) and the so-called third type pieces (6) comprise a groove (16) that runs along their face (7) that is visible to insert a silicone rubber to isolate the interior of the furniture when there are doors.

5. Modular system of furniture construction from aluminum profiles, according to claim 2, **characterized in that** all the main profiles comprise a reinforcement (17) in the form of an increase in interior thickness to improve grip for fixing screws for hinges, shelf supports, or any other accessory that a kitchen or bathroom cabinet in particular may carry.

6. Modular system of furniture construction from aluminum profiles, according to claim 2, **characterized by** two different sizes of secondary pieces (5) in which their only difference is the length between the double hitches (3) from one end (2) to the other of the profile.

## Patentansprüche

1. Modulares System zur Möbelkonstruktion aus Aluminiumprofilen, umfassend einen Satz von extrudierten, rechteckigen Aluminiumprofilen (1), die die Wände, den Boden und die Decke bilden und per se die Struktur des Möbels bilden, **dadurch gekennzeichnet, dass** sie an ihren Enden (2) Doppelhakenabschlüsse (3) aufweisen, die das Verbinden und Fixieren miteinander ermöglichen, wobei das Maß des Bodens des Möbels variiert, wobei bei dieser doppelten Kupplung an einem Ende (2), bestehend aus der Fortsetzung der Seitenflächen des Profils (8), eine etwa 12 Millimeter mehr beträgt als die andere, und beide mit nach innen gerichteten Befestigungselementen (9) abgeschlossen sind, und umfassend das andere Ende (2), wo es auch eine Verlängerung seiner Flächen koppelt, wiederum etwa 12 Millimeter mehr als die andere, und beide mit nach außen gerichteten Befestigungselementen (10) abgeschlossen sind, deren Position verändert wurde und die etwas schmaler als die Breite des Profils sind, sodass sie dank eines Doppelwinkels von 45 Grad (11) kurz vor Erreichen dieser nach außen gerichteten Befestigungen (10) innen an den Befestigungselementen des zu kuppelnden Hakens ausgerichtet sind; und dass die Profile einen Raum (14) umfassen, der durch die kürzere der beiden Befestigungen zusammen mit einer Verlängerung (15) senkrecht zur Verlängerung des Profils, das die gegenüberliegende Befestigung enthält, zur Aufnahme einer Metallplatte (18), die den Boden des Möbels bildet, begrenzt ist.

2. Modulares System zur Möbelkonstruktion aus Aluminiumprofilen nach Anspruch 1, **dadurch gekennzeichnet, dass** die Teile, aus denen sie gebildet werden, nach der Anzahl der Enden (2) mit Doppelhaken (3) klassifiziert werden können, die das Verbinden einiger Profile mit anderen umfassen, umfassend Hauptteile (4), die eine flache Fläche (7) aufweisen, die diejenige ist, die sichtbar ist, und ein Ende (2) mit Doppelhaken (3), das zur Wand oder zu dem Boden zeigt; Sekundärteile (5), die an beiden Enden (2) Haken (3) aufweisen; und Teile des dritten Typs (6), die keine Haken aufweisen und dazu dienen, die Struktur des Möbels, die seine Seitenwände auf der Grundlage von Primär- (4) und Sekundärprofilen (5) bilden würde, horizontal zu verbinden oder zu schließen, wenn es erforderlich ist, dass die obere oder untere Fläche des Möbels hohl ist, beispielsweise um eine Spüle oder ein Keramikkochfeld einzubauen.

3. Modulares System zur Möbelkonstruktion aus Aluminiumprofilen nach den Ansprüchen 1 und 2, **dadurch gekennzeichnet, dass** die Verbindung zwischen Profilen, die die Wände mit den Profilen bilden, die den Boden oder die Decke bilden, oder die Verbindung zwischen Profilen, die die Wände mit den Profilen des dritten Typs bilden, durch Schrauben hergestellt ist, wobei diese Profile auf der Innenseite des sie bildenden Rechtecks runde, röhrenförmige Verstärkungen (12), deren Kreisbogen nicht vollständig geschlossen ist, und auf der Außenseite einer ihrer Flächen eine Markierung (13) umfassen, die mit der Achse der röhrenförmigen Verstärkungen (12) ausgerichtet ist, um der 90-Grad-Verbindung Konsistenz zu verleihen, wobei die Verbindung selbst durch eine kleine Bohrung an der Außenseite des Möbels erreicht wird und die Schraube die Innenseite des Profils durchquert und in die röhrenförmige Verstärkung (12) des anderen Teils eingreift.

4. Modulares System zur Möbelkonstruktion aus Aluminiumprofilen nach Anspruch 2, **dadurch gekennzeichnet, dass** sowohl die Hauptteile (4) als auch die Teile des dritten Typs (6) eine Nut (16) umfassen, die entlang ihrer sichtbaren Fläche (7) verläuft, um Silikonkautschuk einzusetzen, um das Innere des Möbels zu isolieren, wenn Türen vorhanden sind.

5. Modulares System zur Möbelkonstruktion aus Aluminiumprofilen nach Anspruch 2, **dadurch gekennzeichnet, dass** alle Hauptprofile eine Verstärkung (17) in Form einer Erhöhung der Innendicke umfassen, um den Halt für Befestigungsschrauben für Scharniere, Regalstützen oder jedes andere Zubehörteil, das insbesondere ein Küchen- oder Badezimmerschrank tragen kann, zu verbessern.

6. Modulares System zur Möbelkonstruktion aus Aluminiumprofilen nach Anspruch 2, **gekennzeichnet durch** zwei unterschiedliche Größen von Sekundärteilen (5), wobei ihr einziger Unterschied in der Länge zwischen den Doppelhaken (3) von einem Ende (2) zu dem anderen des Profils besteht.

## Revendications

1. Système modulaire de construction de meuble en profilés d'aluminium, comportant un ensemble de profilés d'aluminium extrudés (1), rectangulaires, constituant les parois, la base et le plafond, formant eux-mêmes la structure du meuble, **caractérisé en ce qu'**ils présentent, à leurs extrémités (2), des finitions à double support de fixation (3) qui permettent de se relier et de se fixer les uns aux autres en variant la dimension du fond du meuble, ce double couplage, à une extrémité (2), consistant en la continuation des faces latérales du profilé (8), l'un d'environ 12 millimètres de plus que l'autre, et tous deux finis en attaches orientées vers l'intérieur (9), et comportant l'autre extrémité (2) où il couple également une extension de leurs faces, encore une fois d'environ 12 millimètres de plus que l'autre, et tous deux finis en attaches mais orientés vers l'extérieur (10), ayant modifié leur position et étant légèrement plus étroites que la largeur du profilé, de sorte qu'elles soient alignées à l'intérieur avec les attaches du support de fixation à coupler, grâce à un double angle de 45 degrés (11) juste avant d'atteindre ces attaches (10) orientées vers l'extérieur ; et **en ce que** les profilés comportent un espace (14) délimité par la plus courte des deux attaches ainsi qu'une extension (15) perpendiculaire à l'extension du profilé qui contient l'attache opposée, pour recevoir une plaque métallique (18) qui forme le fond du meuble.

2. Système modulaire de construction de meuble en profilés d'aluminium selon la revendication 1, **caractérisé en ce que** les pièces qui le forment peuvent être classées en fonction du nombre d'extrémités (2) à double support de fixation (3) qui sont comprises pour relier certains profilés avec d'autres, comportant des pièces principales (4), qui présentent une face plate (7) qui est celle qui est visible et une extrémité (2) à double support de fixation (3) qui est orientée vers la paroi ou le fond ; des pièces secondaires (5), qui présentent des supports de fixation (3) aux deux extrémités (2) ; et des pièces du troisième type (6), qui ne présentent pas de support de fixation et qui servent à joindre ou fermer horizontalement la structure du meuble formant ses parois latérales sur la base de profilés primaires (4) et secondaires (5), lorsqu'il est nécessaire que la face supérieure ou inférieure du meuble soit creuse, par exemple pour placer un évier ou une plaque de cuisson en céramique.

3. Système modulaire de construction de meuble en profilés d'aluminium selon les revendications 1 et 2, **caractérisé en ce que** l'union entre profilés formant les parois avec les profilés constituant la base ou le plafond, ou l'union entre profilés formant les parois avec les profilés dits de troisième type est réalisée par vis, ces profilés comportant, à l'intérieur du rectangle qui les forment, des renforts tubulaires (12) circulaires dont l'arc circulaire ne se ferme pas complètement et, sur l'extérieur d'une de leurs faces, un repère aligné (13) avec l'axe desdits renforts tubulaires (12) pour donner une cohérence à l'union de 90 degrés, le joint lui-même est réalisé en pratiquant un petit perçage sur la face extérieure du meuble, et la vis croise la face intérieure du profilé et se visse sur le renfort tubulaire (12) de l'autre pièce.

4. Système modulaire de construction de meuble en profilés d'aluminium, selon la revendication 2, **caractérisé en ce que** les pièces principales (4) et les pièces dites de troisième type (6) comportent une rainure (16) qui s'étend le long de leur face (7) visible pour insérer un caoutchouc de silicone pour isoler l'intérieur du meuble lorsqu'il y a des portes.

5. Système modulaire de construction de meuble en profilés d'aluminium selon la revendication 2, **caractérisé en ce que** tous les profilés principaux comportent un renfort (17) sous forme d'une augmentation d'épaisseur intérieure pour améliorer l'adhérence de vis de fixation pour des charnières, supports d'étagères, ou tout autre accessoire qu'une armoire de cuisine ou de salle de bains en particulier peut porter.

6. Système modulaire de construction de meuble en profilés d'aluminium selon la revendication 2, **caractérisé par** deux tailles différentes de pièces secondaires (5) dans lesquelles leur seule différence est la longueur entre les doubles supports de fixation (3) d'une extrémité (2) à l'autre du profilé.
